# EUROPEAN PATENT APPLICATION

(11) **EP 4 067 739 A1**
(43) Date of publication of application: **05.10.2022**
(21) Application number: 21165686.3
(22) Date of filing: 29.03.2021
(51) Int. Cl.: F22B 37/48, F22B 37/52, F22B 37/54

(54) **METHOD OF AND DEVICE FOR CLEANING AND/OR INSPECTING A FURNACE OR BOILER**

(71) Applicant: Conservator Tyche Beheer B.V., 2992 LA Barendrecht (NL)
(72) Inventor: Wanschers, Freddy Tom, 7642 AB Wierden (NL)
(74) Representative: De Vries & Metman

(57) **Abstract**

The invention relates to a method of cleaning and/or inspecting a furnace of an incinerator and/or a flue gas heat exchanger in a boiler (3) of an incinerator, the heat exchanger comprising one or more bundles (2) of tubes or a membrane wall formed by or containing tubes, the method comprising the steps of
inserting a first beam (4) through an opening (6, 8) in a wall (7, 9) of the furnace or the boiler (3) and alongside a wall of the furnace, a bundle (2) of heat exchanger tubes or a membrane wall in the boiler (3),
forwarding a trolley (18) over the beam (4) to near the furnace wall, tubes, or membrane wall to be cleaned,
extending a further beam (19) from the trolley (18), and
moving the trolley (19) over the beam (4) and/or moving a nozzle (20) jetting an abrasive material and/or dry ice and/or high pressure water and/or moving a scanner (21) along the further beam (19) to clean and/or scan the tubes.

## Description

The invention relates to a method of cleaning and/or inspecting a furnace of an incinerator and/or a flue gas heat exchanger in a boiler of an incinerator, the heat exchanger comprising one or more bundles of tubes or a membrane wall formed by or containing tubes, the method comprising the steps of inserting a first beam, e.g. a truss or profile, through an opening, e.g. a manhole or an inspection hole, in a wall of the furnace or the boiler and alongside a wall of the furnace, a bundle of heat exchanger tubes, e.g. in an alley between two bundles of heat exchanger tubes, or a membrane wall of the boiler. The invention further relates to a device for cleaning and/or inspecting a furnace or a boiler.

WO 98/16329 relates to an upper bundle steam generator cleaning, inspection, and repair system including a deployment support device receivable within the steam generator to raise a cleaning device, an inspection device, and/or a tool up to the upper bundles of the steam generator.

EP 1 170 567 discloses a scale removing device for removing scale adhering to the interior of a shell-and-tube-heat-exchanger-type steam generator. The scale removing device is provided with a flexible lance holding a high-pressure water hose and movable with respect to the tube plate, the tube support plates, and the heat-transfer tubes, and a cleaning head mounted to the forward end of the flexible lance. Formed inside the cleaning head is a cavitation generating nozzle hole communicating with the high-pressure water hose.

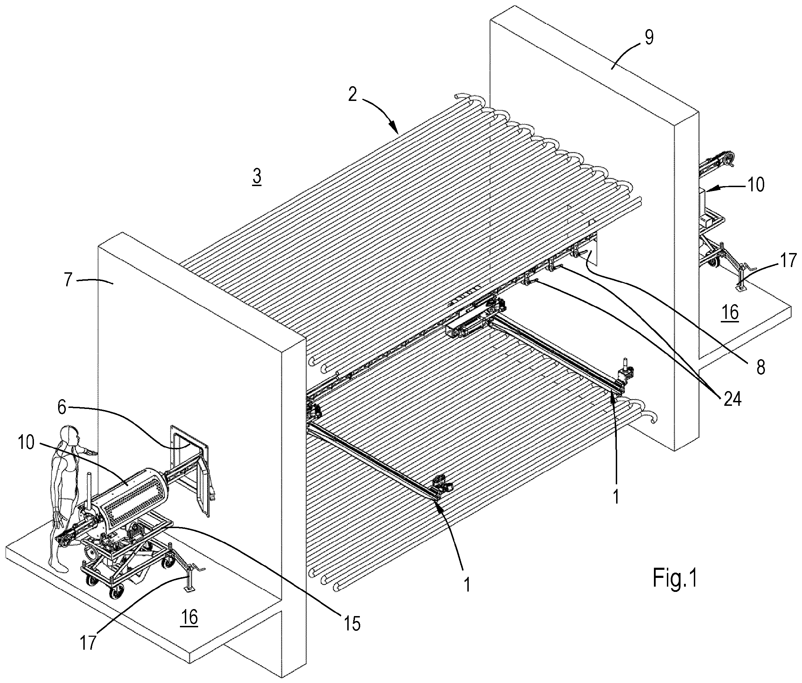

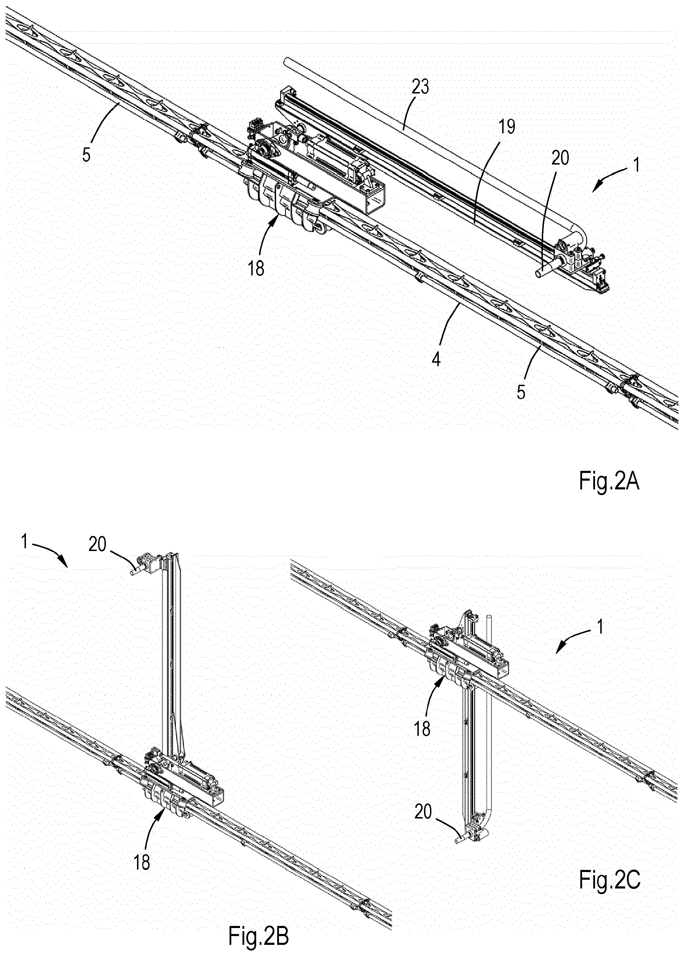

CN 2049755 U relates to a cleaning device for a heat exchanger, in particular to a device for cleaning a single tube of a heat exchanger by spraying with a fluid medium. The cleaning device comprises a vertical rail (indicated by numeral 4 in Figures 1 and 2), a horizontal rail (14), and a nozzle (15).

In larger incinerators, cleaning and inspecting boiler gas heat exchangers is typically performed by installing a scaffolding inside the incinerator along one or more bundles of heat exchanger tubes or along a membrane wall. Personnel enters the boiler via e.g. a manhole and cleans and/or inspects the tubes or wall by manually blasting and/or scanning the heat exchanger tubes or wall.

It is an object of the present invention to provide an improved method of cleaning and/or inspecting furnaces and heat exchangers in relatively large boilers.

To this end, the method according to the present invention comprises the steps of forwarding a trolley over the beam to (near) the furnace wall, tubes, or membrane wall to be cleaned, extending, e.g. lowering or lifting, vertically, horizontally, or at an inclination, a further beam from the trolley, which extending can be performed before the trolley arrives at the desired location on the beam, e.g. en route, and moving the trolley over the beam and/or moving a nozzle jetting an abrasive material, preferably abrasive solid particles, such as sand, grit, glass beads, or metal shot, and/or dry ice and/or high pressure water, and/or moving a scanner, preferably a 3D (laser)scanner, along the further beam to, respectively, clean and/or scan the tubes.

The present invention enables effective, systematic, and consistent cleaning of e.g. a furnace wall or heat exchanger tubes inside an online or offline incinerator, without the need for personnel entering the incinerator. It further enables detailed and systematic inspection and registration of the condition of the wall or tubes after cleaning.

In an embodiment, cleaning and/or scanning is performed by reciprocating the nozzle and/or the scanner along the further beam, while the trolley moves, incrementally or continuously, along the main beam. In a refinement, the nozzle and/or the scanner is moved in a pattern, e.g. along parallel lines, e.g. parallel to the tubes or across the tubes.

In another embodiment, the wall, tubes, and/or membrane wall is/are first cleaned by means of the nozzle and subsequently, preferably with the first beam still installed, scanned with the scanner, thus providing an efficient and quick means to obtain detailed data, e.g. images or a laserscan of the result of the cleaning.

In another embodiment, the wall, tubes, and/or membrane wall is/are captured with a camera while it is cleaned by means of the nozzle. In an embodiment, feedback from the camera is used to adjust and/or operate the nozzle and/or the scanner.

In another embodiment, the data generated by means of the scanning is stored and compared to data obtained or established earlier. In an example, a plurality of tubes, preferably each tube in a bundle or membrane wall, is scanned and the data thus obtained is compared to data obtained by means of an earlier scan or data on an unused or model condition of the tubes or membrane wall. The differences between the scanned data and earlier data provides detailed information on the wear and tear of the tubes or membrane wall.

In an embodiment, during cleaning, the nozzle jetting abrasive material, dry ice and/or high pressure water, or the scanner is rotated, preferably about an axis that extends at least substantially parallel to the tubes. Thus, it becomes possible to clean or scan more than 180 degrees, e.g. 240 degrees, of the circumference of the tubes and the space behind and between the rows of tubes.

In another embodiment, the further beam is attached to one side of the first beam and the nozzle (jet) is directed towards and over the other side of the first beam. The space inside a boiler, e.g. in an alley between heat exchanger bundles, is often limited. This measure provides a straightforward yet effective means to increase or vary the distance between the nozzle and the wall or tubes to be cleaned.

In another embodiment, a wall of the furnace or the boiler comprises a further opening, preferably opposite the first opening, and the other (or distal) end of the first beam is extended through the further opening and supported outside the furnace or the boiler. In an embodiment, the first beam is supported at or near both of its ends.

The invention further relates to a device for cleaning and/or inspecting a furnace and/or a flue gas heat exchanger in a boiler of an incinerator, the heat exchanger comprising one or more bundles of tubes or a membrane wall formed by or containing tubes, which device comprises a first beam, e.g. a truss or a profile, to be inserted through an opening, e.g. a manhole or an inspection hole, in a wall of the furnace or the boiler and alongside a wall of the furnace, alongside a bundle of heat exchanger tubes, e.g. in an alley between two bundles of heat exchanger tubes, or alongside a membrane wall, a holder for supporting one end of the beam from outside the boiler while part of the beam, e.g. the other end and/or a middle section of the beam, is inside the furnace or boiler, a trolley translatingly positioned on the beam, a further beam attached to the trolley and rotatable between a retracted and an extended position, and a nozzle and/or a scanner slidingly attached to the further beam.

In an embodiment, the further beam comprises a rodless cylinder, such as rodless pneumatic cylinder or a screw actuator, to slide the nozzle and/or scanner back and forth along the further beam, providing a compact means to accurately move the nozzle and/or scanner along the further beam.

In an embodiment, the first beam comprises at least three parallel and spatially separated elongated elements, preferably arranged on a circle (seen in cross-section). This arrangement was found to provide a good balance between (small) effective diameter, enabling it to fit through small openings in the installation to be cleaned, and to provide relatively (low) weight and bending stiffness. In a more detailed embodiment, the first beam is formed as a so-called truss comprising a plurality of, e.g. three, parallel elongated elements arranged on a circle (seen in cross-section) and interconnected at regular intervals by further elements, e.g. crosses or inclined rods, interconnecting two or more of the parallel elongated elements.

In an embodiment, the first beam comprises a profile, e.g. made of steel.

In another embodiment, the first beam has an effective or largest diameter in a range from 8 to 25 centimeters, preferably 10 to 18 centimeters. Thus, the first beam will fit through manholes and inspection doors and openings typically found in installations such as large scale incinerators.

In another embodiment, the first beam has a length in excess of 5 meters, preferably in a range from 6 to 15 meters, more preferably in a range from 7 to 12 meters.

In a further embodiment, the first beam comprises a plurality of releasably interconnected segments. Thus, the first beam can be taken apart, facilitating transport, storage, and repair, and, during a work, its length adjusted to the dimensions of the incinerator. It is preferred that the segments have a length in a range from 1 to 4 meters, e.g. two different lengths of 1,5 and 3 meters.

In yet a further embodiment, at least one, preferably all, of the elongated elements of the first beam is a tube.

In an embodiment, each of the tubes in the second beam is connected to a supply for coolant and/or, during online cleaning, filled with a flowing coolant.

In another embodiment, the holder for the first beam comprises bearings slidingly and/or rotatably supporting the second beam.

The holder provides an effective means for, on the one hand, accurately manoeuvring the second (and thus the first) beam inside the installation and, on the other hand, bearing the bending moment resulting from the weight of the parts extending into the installation, such as the first beam, the second beam and coolant present in the first and second beams. In a more detailed embodiment, the holder comprises one or more motors, suitable transmissions (gears, toothed racks), and a controller for sliding and rotating the first and second beams relative to the holder, i.e. for manoeuvring the nozzle and/or the scanner inside the installation.

In an embodiment, the holder is attached to, e.g. mounted on or suspended from, a stand, in particular a movable and optionally collapsible stand, such as a tripod.

In a further embodiment, to provide a stable base, the holder is fixable or fixed to structural elements of the installation, e.g. via a frame or stand.

In an embodiment, the device comprises a further holder to be positioned outside the boiler to support the other (or distal) end of the first beam.

In another embodiment, the device comprises an umbilical for supplying the stream of abrasive material and/or dry ice and/or high pressure water to the nozzle and/or comprising a data cable for transferring scanning data from the scanner.

In another embodiment, the nozzle and/or scanner is (are) attached to the further beam via a joint, e.g. a robotic joint, that provides a further rotatation and thus a further degree of freedom.

Large scale incinerators typically comprise (following the hot gas) a furnace, one or more empty passes, typically comprising membrane walls, followed by convection passes containing one or more bundles of tubes, providing evaporators, superheaters, and/or economisers. The empty pass(es) and the convection pass(es) combined are reffered to as "boiler".

For the sake of completeness, attention is drawn to the following prior art.

WO 2013/014097 A1 relates to a device for cleaning installations, in particular incinerators, scrubbers, and silos, comprising a first arm containing or carrying at least one explosive and connected to a second arm for manipulating the first arm inside an installation. The second arm comprises two or more parallel elongated elements interconnected at a plurality of longitudinal positions.

WO 98/16329 relates to a system for cleaning a nuclear power plant steam generator, the system comprising a deployment subsystem (numeral 50, Fig. 2), which is used to deploy a spray head vertically within the steam generator to the elevation of the tube support plate to be accessed.

US 4,106,516 relates to a truck trailer interior washing system with a washing head mounted on an extendible and retractable boom horizontally mounted for automated washing cycle extension into and out of the trailer interior.

US Reissued patent 29,987 relates to an apparatus and method for washing out the interiors of truck and trailer bodies. A washer head is carried on an elongate boom which is mounted on a pedestal for traversing movement along a horizontal axis. The boom is moved by means of a drive motor which is in engagement with a chain having its opposite ends secured to opposite ends of the boom. The washer head includes a frame which is mounted on an end of the boom for pivotal movement between elevated and lower positions.

US 2018/0010867 discloses a mobile multi-function hydro-blast cleaning and tube lancing apparatus and system built into a containment vessel (tank) to enable it to be transported to a facility with ease and preform hydro-blasting/tube lancing with the ability to contain all the fluids involved in the cleaning and lancing process.

The invention will now be explained in more detail with reference to the drawings, which show a preferred embodiment of the present invention.
Figure 1 is an isometric view of a device for cleaning installations, such as the boiler of an incinerator, according to the present invention.
Figure 2A is a detailed isometric view of a first beam, trolley, and a second beam used in the device shown in Figure 1.
Figures 2B and 2C show the second been extended upwards and downwards, respectively.
Figure 3 shows a nozzle for an abrasive material or dry ice and/or high pressure water attached to the proximal end of the second beam.
Figure 4 shows an inspection scanner attached to the proximal end of the second beam.
Figure 5 is an isometric view of a device similar to that shown in Figure 1, cleaning heat exchanger tubes that are oriented vertically.
Figure 6 is cross-section of the device shown in Figure 5.

Figure 1 is an isometric view of a device as show in Figure 1, for cleaning installations, such as the boiler of an incinerator, according to the present invention. Figure 1 shows a device 1 for cleaning and/or inspecting bundles 2 of tubes of a heat exchanger or a membrane wall in a boiler 3. The device comprises a first beam, in this example a truss 4 assembled of a plurality of releasably interconnected segments 5, each having a length of e.g. 3 meters. The truss 4 has a total length in excess of the width of the boiler.

In this example, the truss 4 has been inserted through a first manhole 6 in a first wall 7 of the boiler and through a further manhole 8 in a wall 9 of the boiler directly opposite the first wall 7. The truss 4 extends through an alley between the two bundles 2 of heat exchanger tubes. Both ends of the truss are supported by a holder 10 located outside of the boiler and are mounted on a mobile frame 15 by means of an adjustable head, which comprises at least a vertical pivot for swivelling the truss 4 and a horizontal pivot for tilting the truss 4. The frame 15 is positioned on a platform 16 next to the boiler 3 and stabilized by extendable stands 17.

One or more trolleys, in this example two trolleys 18, are translatingly positioned on the truss 4. A further beam 19 is attached to each of the trolleys 18 and rotatable between a retracted positon (shown in Figure 2A) and in this example at least two extended positions (shown in Figures 1, 2B, and 2C).

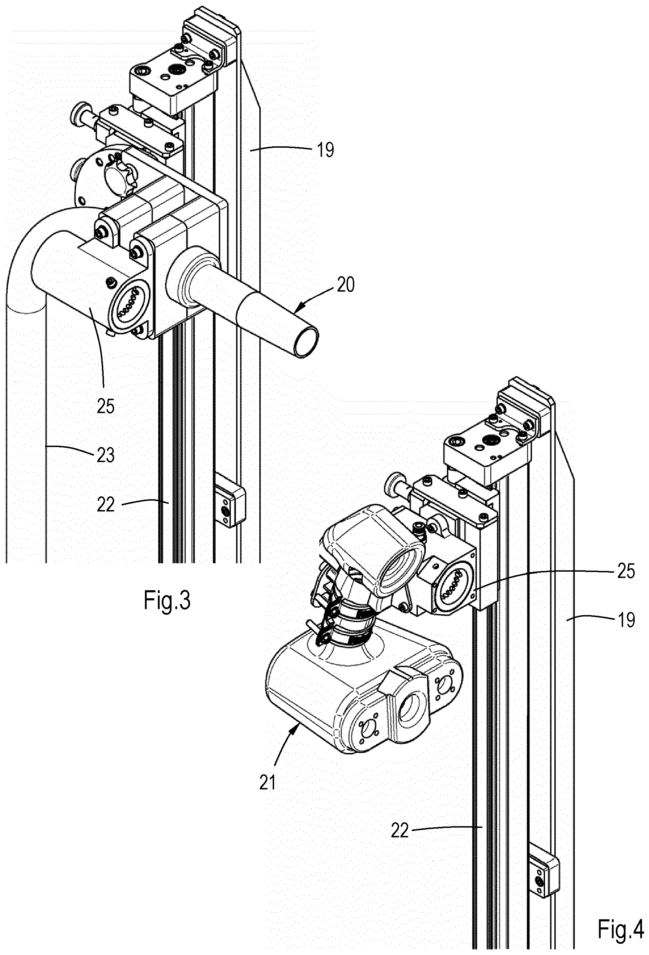

A nozzle 20, shown in detail in Figures 2A-2C and 3, for an abrasive material or dry ice and/or high pressure water is attached to one of the beams 19 and a scanner, in in particular a 3D scanner 21, in this example a Creaform Go!SCAN 3D 50, shown in detail in Figure 4, is attached to the other beam. To be able to slide the nozzle and scanner back and forth along their respective beams each beam is provided with rodless cylinder, in this example a pneumatic cylinder 22 closed at both ends and containing a piston coupled mechanically or magnetically to the nozzle or scanner.

The trolley carrying the nozzle is provided with an umbilical 23 for supplying a stream of abrasive material, or dry ice and/or high pressure water and the trolley carrying the scanner is provided with a data cable (not shown) for transferring scanned data. If the umbilical is relatively long and/or heavy, further trolleys 24 (shown in Figure 1) can be provided on the first beam to support the umbilical. In another embodiment, a camera 25 is located near the nozzle and/or the scanner. Feedback from the camera can be used to adjust and/or operate the nozzle and/or the scanner.

In an example, cleaning is carried out by:
introducing the trolleys 18 in the boiler 3 along the truss 4 and through one of the manholes 6,8, with the further beams 19 in the retracted position,
deploying the nozzle 20 and the scanner 21 by rotating the further beams to an extended position, to located them near one of the bundles,
activating the nozzle by supplying an abrasive material, preferably abrasive solid particles, such as sand, grit, glass beads, or metal shot, or dry ice and/or high pressure water to the nozzle via the umbilical, and
reciprocating the nozzle 20 along the further beam 19, while the trolley 18 moves, incrementally or continuously, along the main beam, thus effectively moving the nozzle in a systematic pattern along the entire surface of the bundle and cleaning the tubes.

When all tubes have been cleaned, the procedure is repeated with the scanner 21 to obtain efficiently and quickly detailed data on the bundle, in particular on the wear and tear of the tubes.

In sum, the present invention enables effective, systematic, and consistent cleaning of heat exchanger tubes inside an online or offline incinerator, without the need for personnel entering the incinerator. It further enables detailed and systematic inspection and registration of the condition of the tubes after cleaning.

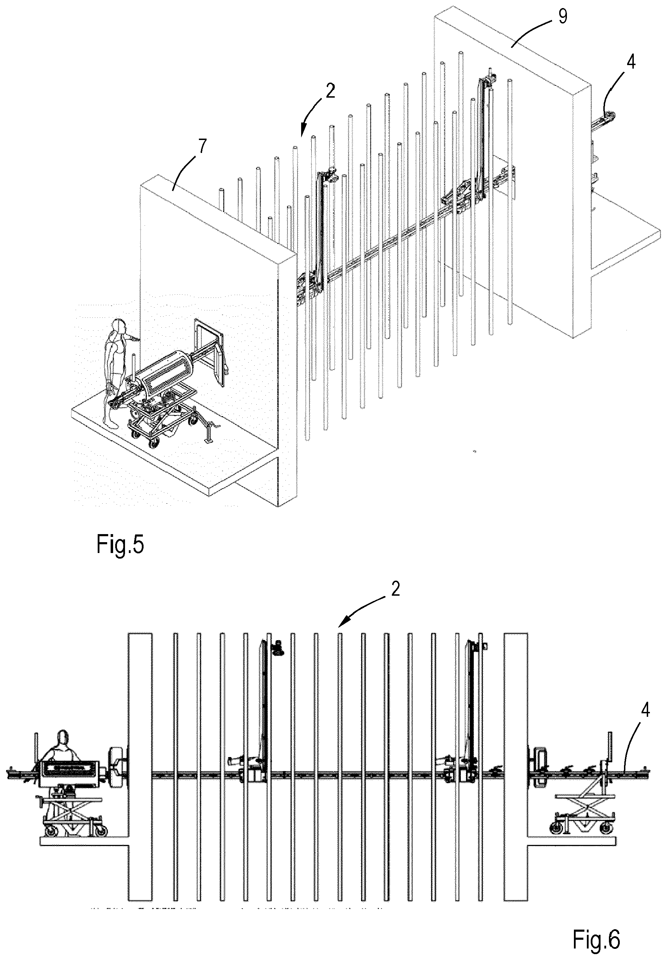

The invention is not restricted to the above-described embodiments, which can be varied in a number of ways within the scope of the claims. E.g., the first beam can be used as a cantilever, i.e. supported at one end only. Another example is shown in Figures 5 and 6, where the truss 4 again extends through an alley between two bundles 2 of heat exchanger tubes, but the tubes extend vertically instead of horizontally (as shown in Figure 1). The method and device according to the present invention are flexible in configuration and can be used in conjunction with a great variety of furnaces and boilers.

## Claims

1. Method of cleaning and/or inspecting a furnace of an incinerator and/or a flue gas heat exchanger in a boiler (3) of an incinerator, the heat exchanger comprising one or more bundles (2) of tubes or a membrane wall formed by or containing tubes, the method comprising the steps of
inserting a first beam (4) through an opening (6, 8) in a wall (7, 9) of the furnace or the boiler (3) and alongside a wall of the furnace, a bundle (2) of heat exchanger tubes or a membrane wall in the boiler (3),
forwarding a trolley (18) over the beam (4) to near the furnace wall, tubes, or membrane wall to be cleaned,
extending a further beam (19) from the trolley (18), and
moving the trolley (19) over the beam (4) and/or moving a nozzle (20) jetting an abrasive material and/or dry ice and/or high pressure water and/or moving a scanner (21) along the further beam (19) to clean and/or scan the tubes.

2. Method according to claim 1, wherein cleaning and/or scanning is performed by reciprocating the nozzle (20) and/or the scanner (21) along the further beam (19), while the trolley (18) moves, incrementally or continuously, along the main beam (4).

3. Method according to claim 2, wherein the nozzle (20) and/or the scanner (21) is moved in a pattern.

4. Method according to any one of the preceding claims, wherein the wall, tubes, and/or membrane wall is/are first cleaned by means of the nozzle (20) and subsequently scanned with the scanner (21).

5. Method according to any one of the preceding claims, wherein the wall, tubes, and/or membrane wall is/are captured with a camera (25) while it is cleaned by means of the nozzle.

6. Method according to any one of the preceding claims, wherein the data generated by means of the scanning is stored and compared to data obtained or established earlier.

7. Method according to any one of the preceding claims, wherein, during cleaning, the nozzle (20) jetting abrasive material or dry ice and/or high pressure water or the scanner (21) is rotated, preferably about an axis that extends at least substantially parallel to the wall or tubes.

8. Method according to any one of the preceding claims, wherein the further beam (19) is attached to one side of the first beam (4) and the nozzle (20) is directed towards and over the other side of the first beam (4).

9. Method according to any one of the preceding claims, wherein a wall (7, 9) of the furnace or the boiler (3) comprises a further opening (8), preferably opposite the first opening (6), and the distal end of the first beam (4) is extended through the further opening (8) and supported outside the boiler (3).

10. Device (1) for cleaning and/or inspecting a furnace and/or a flue gas heat exchanger in a boiler of an incinerator, the heat exchanger comprising one or more bundles (2) of tubes or a membrane wall formed by or containing tubes, which device (1) comprises
a first beam (4) to be inserted through an opening (6, 8) in a wall (7, 9) of the furnace or the boiler (3) and alongside a wall of the furnace, a bundle (2) of heat exchanger tubes or a membrane wall,
a holder (10) for supporting one end of the beam (4) from outside the furnace or boiler (3) while part of the beam (4) is inside the furnace or boiler (3), a trolley (18) translatingly positioned on the beam (4), a further beam (19) attached to the trolley (18) and rotatable between a retracted and an extended position, and a nozzle (20) and/or a scanner (21) slidingly attached to the further beam (19).

11. Device (1) according to claim 10, wherein the further beam (19) comprises a rodless cylinder (22) to slide the nozzle (20) and/or scanner (21) back and forth along the further beam (19).

12. Device (1) according to claim 10 or 11,
wherein the first beam (4) comprises a plurality of releasably interconnected segments (5).

13. Device (1) according to any one of the claims 10-12, comprising a further holder (10) to be positioned outside the boiler (3) to support the other end of the first beam (4).

14. Device (1) according to any one of the claims 10-13, comprising an umbilical (23) for supplying the stream of abrasive material and/or dry ice and/or high pressure water to the nozzle (20) and/or comprising a data cable for transferring scanning data from the scanner (21).

15. Device according to any one of the claims 10-14, wherein the nozzle (20) and/or scanner (21) is (are) attached to the further beam (19) via a joint that provides a further rotatation.
